# EUROPEAN PATENT APPLICATION

(11) **EP 4 654 320 A1**
(43) Date of publication of application: **26.11.2025**
(21) Application number: 25167328.1
(22) Date of filing: 31.03.2025
(51) Int. Cl.: H01M 10/0567

(54) **ELECTROLYTE AND LITHIUM-ION BATTERY**

(30) Priority: 24.05.2024 CN 202410657965
(71) Applicant: AESC Japan Ltd., Yokohama-Shi, Kanagawa 220-0012 (JP)
(72) Inventor: YU, Le, Pudong New Area Shanghai, 201315 (CN); ZHANG, Xiaozhe, Pudong New Area Shanghai, 201315 (CN)
(74) Representative: Becker, Eberhard

(57) **Abstract**

An electrolyte includes a solvent, being a fluorinated solvent, lithium salt, and an additive. The additive includes triallyl isocyanurate. The electrolyte provided by the embodiments of the disclosure is able to withstand high voltage, and when the electrolyte provided by the embodiments of the disclosure is applied to a high voltage lithium-ion battery, the electrolyte forms a stable protective film at an interface between electrode sheets and the electrolyte. The stability of the interface between the electrode sheets and the electrolyte is thereby ensured, and the electrical performance of high voltage battery is improved. Other embodiments of the disclosure further provide a lithium-ion battery.

## Description

### BACKGROUND

### Technical Field

The embodiments of the disclosure relate to the field of batteries, more specifically, relates to an electrolyte and a lithium-ion battery.

### Description of Related Art

In recent years, the rapid development of the new energy vehicle market has driven the explosive growth in market value of the power battery market dominated by secondary alkali metal ion batteries. However, currently, the energy density of the commercialized secondary alkali metal ion batteries has approached its theoretical limit. To fundamentally address the range anxiety for electric vehicle buyers, improving the energy density of currently-available batteries by increasing the battery voltage is an intuitive and feasible method.

At present, fluorinated solvents such as fluorinated ethyl methyl carbonate (FEMC) are commonly used as electrolyte solvents to improve the high voltage resistance of the electrolyte. Due to the high electron-withdrawing ability of fluorine atoms in fluorinated solvents, the oxidation stability of conventional carbonate esters may be better improved. Therefore, the fluorinated solvents may serve as main solvents and be widely applied in high voltage battery systems, so the high voltage resistance of lithium-ion battery electrolytes may be significantly improved. However, with the increase in battery voltage, higher requirements are also imposed on the high voltage resistance of the electrolytes.

### SUMMARY

In view of the problems found in the related art, the purpose of the disclosure is to provide an electrolyte capable of withstanding high voltage, and when the electrolyte is applied to a high voltage lithium-ion battery, the electrolyte is able to form a stable protective film at the interface between the electrode sheets and the electrolyte, so that the stability of the interface between the electrode sheets and electrolyte is ensured and the electrical performance of the high voltage battery is improved.

To achieve the above, in one aspect, the disclosure provides an electrolyte including a solvent, being a fluorinated solvent, lithium salt, and an additive. The additive includes triallyl isocyanurate.

In some embodiments, the additive further includes 1-propene 1,3-sultone.

In some embodiments, a mass of 1-propene 1,3-sultone accounts for 0.01% to 1% of a total mass of the electrolyte, and a mass of triallyl isocyanurate accounts for 0.01% to 1% of the total mass of the electrolyte.

In some embodiments, the fluorinated solvent includes fluorinated ethyl methyl carbonate.

In some embodiments, the fluorinated solvent further includes fluorinated ethylene carbonate.

In some embodiments, a mass ratio between the fluorinated ethyl methyl carbonate and the fluorinated ethylene carbonate is 7:3 to 10:0.

In some embodiments, a mass of the lithium salt is 12% to 20% of the total mass of the electrolyte.

In some embodiments, the lithium salt is one or more selected from lithium hexafluorophosphate, lithium bis(fluorosulfonyl)imide, lithium bis(trifluoromethanesulfonyl)imide, lithium tetrafluoroborate, lithium methanesulfonate, lithium trifluoromethanesulfonate, lithium hexafluoroarsenate, lithium hexafluoroantimonate, lithium perchlorate, lithium difluoro(oxalato)borate, lithium bis(oxalato)borate, and lithium difluorophosphate.

The disclosure further aims to provide a lithium-ion battery including an electrolyte capable of withstanding high voltage, and the electrolyte forms a stable protective film at an interface between electrode sheets and the electrolyte in the battery. The stability of the interface between the electrode sheets and electrolyte at high temperatures is ensured, and the high-temperature stability of the high voltage battery is thus significantly improved. According to another aspect, the disclosure further provides a lithium-ion battery including a positive electrode sheet, a negative electrode sheet, a separator located between the positive electrode sheet and the negative electrode sheet, and the electrolyte according to any one of the above.

In some implementations, the positive electrode sheet includes a positive current collector and a positive electrode active material located on the positive current collector. The positive electrode active material includes lithium nickel manganese oxide, and the chemical formula of the lithium nickel manganese oxide is LiₐNiₓMn_{y}O_{4 - z}M_{z}, where 0.90≤a≤1.10, 0.4≤x≤0.6, 1.4≤y≤1.6, 0≤z≤0.1, and the element M is one or more of Cl, Br, I, S, Se, Te, or F.

In some embodiments, the negative electrode sheet includes a negative electrode current collector and a negative electrode material layer located on the negative electrode current collector, and the negative electrode material layer includes artificial graphite.

Beneficial technical effects of the disclosure include the following:
The solvent of the electrolyte is a fluorinated solvent, and triallyl isocyanurate is added to the perfluorinated solvent as an additive. In this way, the electrolyte is able to withstand high voltage, and a stable protective film is formed at the interface between the electrode sheets and the electrolyte when the electrolyte is applied to a battery. As such, the stability of interface between the electrode sheets and electrolyte is ensured, and the electrical performance of the high voltage battery is improved.

In addition, through the combined use of 1-propene 1,3-sultone and triallyl isocyanurate as additives in the fluorinated solvent, when the electrolyte is applied to the battery, a protective film that is stable at high temperatures is formed at the interface between the electrode sheets and the electrolyte. As such, the stability of the interface between the electrode sheets and electrolyte at high temperatures is ensured, and the high-temperature stability of the high voltage battery is thus significantly improved.

Since the electrolyte uses fluorinated solvent as the solvent and triallyl isocyanurate is added as the additive, in the embodiments of the disclosure, the electrolyte forms a stable protective film at the interface between the electrode sheets and the electrolyte in the lithium-ion battery. The stability of the interface between the electrode sheets and the electrolyte is thereby ensured, and the electrical performance of high voltage batteries is improved.

### DESCRIPTION OF THE EMBODIMENTS

The following describes exemplary embodiments in detail and comprehensively. However, these exemplary embodiments may be implemented in different ways and shall not be interpreted as limited to the embodiments described in the disclosure. On the contrary, the purpose of providing these embodiments is to make the disclosure thorough and complete, and to fully convey the scope of the disclosure to a person having ordinary skill in the art. For techniques or conditions not specified in the embodiments, these techniques or conditions are implemented according to the techniques or conditions described in the literature in the art or according to product specifications. Reagents or instruments used without specifying manufacturers are all conventional products that may be purchased through regular channels.

Fluorinated solvents, such as fluorinated carbonate solvents, serve as an important solvent component in high voltage battery systems. Fluorinated solvents possess favorable high voltage stability and may ensure the interface stability of the electrolyte on the positive electrode side. However, the additives used in existing fluorinated solvents form unstable interface films at the interface between the electrode sheet and the electrolyte, which may lead to reduced electrical performance of high voltage batteries. Additionally, due to the fluorine atoms in fluorinated solvents being easily detached at high temperatures, the detached fluorine atoms react with active hydrogen in the electrolyte to form hydrofluoric acid (HF), which corrodes the alkaline substances in the solid-electrolyte interface (SEI) film on the negative electrode side and the solid-electrolyte interface (CEI) film on the positive electrode side. This results in interface destruction and continuous side reactions, ultimately manifesting as a series of issues such as gas generation at high temperatures, high-temperatures capacity loss, cycle decay, and increased direct current resistance (DCR), so the high-temperature performance of the battery is affected.

The inventors of the disclosure have discovered that when perfluorinated solvents (i.e., solvents that are all fluorinated solvents) are used as the electrolyte solvent, by using triallyl isocyanurate as an additive in the perfluorinated solvents, when the electrolyte is applied to high voltage lithium-ion batteries, a stable protective film may be formed at the interface between the electrode sheet and the electrolyte. The stability of the interface between the electrode sheets and the electrolyte is thereby ensured, and the electrical performance of high voltage batteries is improved. Further, 1-propene 1,3-sultone (PST) and triallyl isocyanurate (TAIC), which are resistant to high voltage, may be used in combination as additives in the perfluorinated solvents. When this electrolyte is applied to lithium-ion batteries, 1-propene 1,3-sultone and triallyl isocyanurate may participate well in forming a stable protective film at high temperatures, and the stability of the electrolyte during high-temperature cycling is significantly improved. In addition, the DC resistance of the battery may be reduced, and the high-temperature cycling stability as well as high-temperature storage capacity retention ratio are improved.

The disclosure provides an electrolyte including a solvent, lithium salt, and an additive. The solvent is a fluorinated solvent, and the additive includes triallyl isocyanurate. To be specific, the solvent is a fluorinated solvent, which means that the solvent in the electrolyte is a perfluorinated solvent. The fluorinated solvent possesses favorable high voltage stability, so that interface stability of the electrolyte at a positive electrode side is ensured. In addition, the structural formula of triallyl isocyanurate is:

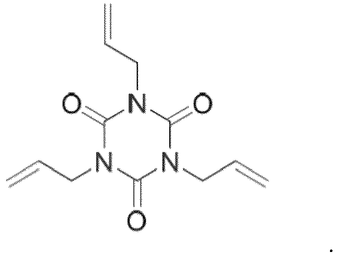

In the electrolyte provided by the embodiments of the disclosure, by adding triallyl isocyanurate as an additive to the perfluorinated solvent, when the electrolyte is applied to a high voltage lithium-ion battery, triallyl isocyanurate may form a protective film at an interface between electrode sheets (including a positive electrode sheet and a negative electrode sheet) and the electrolyte that is not easily swollen by the perfluorinated solvent. This protective film may ensure the stability of the interface between the electrode sheets and the electrolyte, so the electrical performance of the high voltage battery is improved.

In some embodiments, the additive further includes 1-propene 1,3-sultone. Through the combined use of 1-propene 1,3-sultone and triallyl isocyanurate as additives in the perfluorinated solvent, when the electrolyte is applied to the battery, 1-propene 1,3-sultone and triallyl isocyanurate may generate a protective film stable at high temperatures at the interface between the electrode sheets (including the positive electrode sheet and the negative electrode sheet) and the electrolyte, and the stability of the electrolyte during high-temperature cycling is thus significantly improved. Further, because 1-propene 1,3-sultone and triallyl isocyanurate may form a protective film on the negative electrode sheet, it enables the electrolyte to possess a certain reduction resistance stability on the negative electrode side of the battery. In addition, the protective film formed by the electrolyte on the negative electrode side may also be referred to as a negative electrode side solid-electrolyte interface (SEI) film. The negative electrode side solid-electrolyte interface film may effectively protect the interface between the negative electrode sheet and the electrolyte, so that side reactions of the electrolyte are reduced, and stable cycling of the battery is ensured. The protective film formed by the electrolyte on the positive electrode side may also be referred to as a positive electrode side solid-electrolyte interface (CEI) film. The positive electrode side solid-electrolyte interface film may effectively protect the interface between the positive electrode sheet and the electrolyte, so that side reactions of the electrolyte are reduced, and stable cycling of the battery is ensured.

To be specific, since TAIC itself contains unsaturated allyl functional groups, and PST is a sulfonic acid ester containing unsaturated hydrocarbons, if PST is used alone as an additive in a perfluorinated solvent without using TAIC as an additive, it may lead to a higher concentration of sulfonic acid ester groups in the S-containing protective film formed after PST polymerization. Due to the significant structural correlation between carbonate esters in the fluorinated solvent and sulfonic acid esters, the polymer structure of PST is easily swollen by carbonate esters, causing the protective film to swell and expose some new interfaces to further react with the electrolyte. As such, protection provided by this protective film for the electrode sheet is insufficient, and the protective film is unstable. Therefore, compared with using PST alone as an additive in the perfluorinated solvent, by adding triallyl isocyanurate as an additive in the perfluorinated solvent, TAIC may form an N-containing protective film at the interface between the electrode sheet and the electrolyte that is not easily swollen by carbonate esters in the fluorinated solvent. Accordingly, the electrode sheet may be fully protected, the stability of the interface between the electrode sheet and the electrolyte is ensured, and the electrical performance of the high voltage battery is thereby improved.

However, when TAIC is used alone as an additive in the perfluorinated solvent, due to the poor thermal stability of the six-membered cyclic amide in TAIC, although TAIC forms a N-containing protective film that is not easily swollen by carbonate esters in the perfluorinated solvent, this protective film is thermally unstable. In the electrolyte of the provided by the embodiments of the disclosure, the additive may also include 1-propene 1,3-sultone to improve the stability of the protective film at high temperatures. To be specific, since both 1-propene 1,3-sultone and triallyl isocyanurate are additives containing unsaturated functional groups, when the electrolyte of the disclosure including both 1-propene 1,3-sultone and triallyl isocyanurate is applied to a battery, both 1-propene 1,3-sultone and triallyl isocyanurate form films on both the positive electrode sheet side and the negative electrode sheet side. Further, when the two are together, they may form a long-chain N- and S-containing copolymer protective film. Compared to the short-chain polymer protective film formed by using TAIC or PST alone, this long-chain copolymer protective film may achieve improved thermal stability while reducing swelling. Therefore, compared to the electrolyte containing fluorinated solvents in the related art, when the electrolyte provided by the embodiments of the disclosure is applied to a battery, due to the formation of a thermally stable protective film at the interface between the electrode sheet and the electrolyte, the cycling stability and the storage capacity retention ratio of the battery at high temperatures are improved and increased.

In some embodiments, a mass of 1-propene 1,3-sultone accounts for 0.01% to 1% of a total mass of the electrolyte, and a mass of triallyl isocyanurate accounts for 0.01% to 1% of the total mass of the electrolyte. In the embodiments of the disclosure, by adding appropriate masses of TAIC and PST, it may be ensured that both additives form thermally stable copolymer protective films simultaneously on the positive and negative electrode sides. As such, a concentration ratio of short-chain polymers formed by using TAIC or PST alone in the long-chain copolymer protective film is reduced, so thermal stability is improved, and the ability of the protective film to be swollen is lowered. However, when the addition amounts of both TAIC and PST are excessive, it may lead to excessive growth in a thickness of the protective film, and the direct current resistance of the battery is thereby increased, thus manifesting as high-temperature capacity loss and reduced cycle life of the battery. In some embodiments, the mass of 1-propene 1,3-sultone accounts for 0.5% of the total mass of the electrolyte. In some embodiments, the mass of triallyl isocyanurate accounts for 0.5% of the total mass of the electrolyte.

In some embodiments, the fluorinated solvent includes fluorinated ethyl methyl carbonate (FEMC). The structural formula of fluorinated ethyl methyl carbonate is:

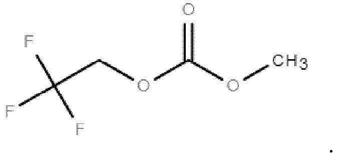

In a further embodiment where the fluorinated solvent includes fluorinated ethyl methyl carbonate, the fluorinated solvent may also include fluorinated ethylene carbonate (FEC). In an embodiment where the fluorinated solvent is a fluorinated carbonate solvent, due to the favorable voltage stability of the fluorinated carbonate solvent, the interface stability of the electrolyte on the positive electrode side is ensured. In a further embodiment, a mass ratio between the fluorinated ethyl methyl carbonate and the fluorinated ethylene carbonate is 7:3 to 10:0. In a further embodiment, the mass ratio between the fluorinated ethyl methyl carbonate and the fluorinated ethylene carbonate is 7:3. When a proportion of fluorinated ethyl methyl carbonate in the solvent is high and a proportion of fluorinated ethylene carbonate is low, the probability of fluorinated ethyl methyl carbonate decomposing at the interface between the electrode sheet and the electrolyte increases. A large amount of by-products unstable at high temperatures are thus produced, so performance of the battery at high temperatures is lowered. Therefore, maintaining the mass ratio between fluorinated ethyl methyl carbonate and fluorinated ethylene carbonate at 7:3 to 10:0 may result in improved and increased cycling stability and storage capacity retention ratio of the battery at high temperatures. In addition, when the mass ratio of fluorinated ethyl methyl carbonate to fluorinated ethylene carbonate is 7:3, the battery exhibits the most favorable cycling stability and storage capacity retention ratio at high temperatures.

In some embodiments, a mass of the lithium salt is 12% to 20% of the total mass of the electrolyte. In other embodiments, the lithium salt may be one or more selected from lithium hexafluorophosphate (LiPF₆), lithium bis(fluorosulfonyl)imide (LiFSI), lithium bis(trifluoromethanesulfonyl)imide (LiTFSI), lithium tetrafluoroborate (LiBF₄), lithium methanesulfonate (LiCH₃SO₃). lithium trifluoromethanesulfonate (LiCF₃SO₃). lithium hexafluoroarsenate (LiAsF₆), lithium hexafluoroantimonate (LiSbF₆), lithium perchlorate (LiClO₄), Li[BF₂(C₂O₄)], Li[PF₂(C₂O₄)₂], Li[N(CF₃SO₂)₂], Li[C(CF₃SO₂)₃], lithium difluoro(oxalato)borate (LiODFB), lithium bis(oxalato)borate (LiBOB), and lithium difluorophosphate (LiPO₂F₂). In some embodiments, the lithium salt may be LiPF₆, and the mass of LiPF₆ is 13% of the total mass of the electrolyte. In some embodiments, the lithium salt may include LiPF₆ and lithium bis(fluorosulfonyl)imide (LiFSI), the mass of the lithium salt is 12% to 20% of the total mass of the electrolyte, and the mass of LiPF₆ is 8% to 20% of the total mass of the electrolyte. In some embodiments, the additive may also include vinylene carbonate (VC), and vinylene carbonate may assist in forming a film on the negative electrode.

According to another aspect of the disclosure, a lithium-ion battery including a positive electrode sheet, a negative electrode sheet, a separator located between the positive electrode sheet and the negative electrode sheet, and the electrolyte according to the above is provided. In the lithium-ion battery, due to the application of the aforementioned electrolyte, by using a fluorinated solvent as the solvent and using triallyl isocyanurate as an additive, this electrolyte may form a stable protective film at the interface between the electrode sheets (including both the positive and negative electrode sheets) and the electrolyte in the lithium-ion battery. Accordingly, the stability of the interface between the electrode sheets and the electrolyte is ensured, and the electrical performance of high voltage batteries is improved. In some implementations, the positive electrode sheet includes a positive current collector and a positive electrode active material located on the positive current collector. The positive electrode active material includes lithium nickel manganese oxide, with the chemical formula of LiₐNiₓMn_{y}O_{4-z}M_{z}, where 0.90≤a≤1.10, 0.4≤x≤0.6, 1.4≤y≤1.6, 0≤z≤0.1, and element M is one or more of Cl, Br, I, S, Se, Te, or F. In some embodiments, the negative electrode sheet includes a negative electrode current collector and a negative electrode material layer located on the negative electrode current collector, and the negative electrode material layer includes artificial graphite.

### Positive electrode sheet

The lithium-ion battery provided by the disclosure includes a positive electrode sheet including a positive electrode current collector and a positive electrode material layer disposed on the positive electrode current collector. The positive electrode material layer includes a positive electrode active material capable of absorbing and releasing lithium (Li) (hereinafter, sometimes referred to as "positive electrode material capable of absorbing/releasing lithium Li"). Examples of the positive electrode active material capable of absorbing/releasing lithium (Li) may include lithium nickel manganese oxide, lithium cobalt oxide, lithium nickel cobalt manganese oxide, lithium nickel cobalt aluminum oxide, lithium manganese oxide, lithium iron manganese phosphate, lithium vanadium phosphate, lithium vanadium oxide phosphate, lithium iron phosphate, lithium titanate, and lithium-rich manganese-based materials. The positive electrode current collector may use, for example, aluminum foil and nickel foil; however, other positive electrode current collectors commonly used in the art may also be used. In some embodiments, the positive electrode material layer may further include a positive electrode conductive agent and a positive electrode binder. In some embodiments, the positive electrode conductive agent may be one or a mixture of several of conductive carbon black (Super P), acetylene black, nano metal powder, carbon nanotubes, and graphene. In some embodiments, the positive electrode binder may be one or a mixture of several of polyvinylidene fluoride (PVDF), polyvinylidene fluoride-hexafluoropropylene, polytetrafluoroethylene, sodium carboxymethyl cellulose, and styrene-butadiene rubber.

### Electrolyte

The lithium-ion battery provided by the disclosure includes an electrolyte including lithium salt, an organic solvent, and additives. The organic solvent is a fluorinated solvent, and the additives include 1-propene 1,3-sultone and triallyl isocyanurate. Preferably, a mass of 1-propene 1,3-sultone accounts for 0.01% to 1% of a total mass of the electrolyte, and a mass of triallyl isocyanurate accounts for 0.01% to 1% of the total mass of the electrolyte. Preferably, the additives may also include vinylene carbonate (VC).

The fluorinated solvent may be a conventional fluorinated solvent in the art, for example, the fluorinated solvent includes fluorinated ethyl methyl carbonate (FEMC). Preferably, the fluorinated solvent also includes fluorinated ethylene carbonate (FEC).

The lithium salt may be the conventional lithium salt in the art. For instance, the lithium salt may include LiPF₆ and lithium bis(fluorosulfonyl)imide (LiFSI), a mass of the lithium salt is 12% to 20% of the total mass of the electrolyte, and a mass of LiPF₆ is 8% to 20% of the total mass of the electrolyte.

### Negative electrode sheet

The lithium-ion battery provided by the disclosure includes a negative electrode sheet including a negative electrode current collector and a negative electrode material layer disposed on the negative electrode current collector. In some embodiments, the negative electrode current collector may be a copper foil. In some embodiments, the negative electrode material layer includes a negative electrode active material, a negative electrode conductive agent, a negative electrode binder, and a negative electrode thickener.

The negative electrode active material includes a negative electrode material capable of absorbing and releasing lithium (Li) (hereinafter, sometimes referred to as "negative electrode material capable of absorbing/releasing lithium Li"). Examples of the negative electrode material capable of absorbing/releasing lithium (Li) may include carbon materials, metal compounds, oxides, sulfides, lithium nitrides such as LiN₃, lithium metal, metals that form alloys with lithium, and polymer materials.

The carbon material may include low-graphitized carbon, easily graphitized carbon, artificial graphite, natural graphite, mesocarbon microbeads, soft carbon, hard carbon, pyrolytic carbon, coke, glassy carbon, sintered body of organic polymer compounds, carbon fiber, and activated carbon. Herein, coke may include pitch coke, needle coke, and petroleum coke. The sintered body of organic polymer compounds refers to a material obtained by calcining polymer materials such as phenolic plastics or furan resins at an appropriate temperature to carbonize them, with some of these materials being classified as low-graphitized carbon or easily graphitized carbon. Examples of the polymer materials may include polyacetylene and polypyrrole.

Among these negative electrode materials capable of absorbing/releasing lithium (Li), materials with charging and discharging voltages close to those of lithium metal may be further selected. This is because the lower the charging and discharging voltages of the negative electrode material, the easier it is for an electrochemical device (e.g., a secondary battery) to have higher energy density. Herein, carbon materials may be selected as the negative electrode material because they undergo only small changes in crystal structure during charging and discharging, so favorable cycle characteristics are provided and large charging and discharging capacities may thus be obtained. Graphite may be particularly selected because it may provide large electrochemical equivalents and high energy density.

In addition, the negative electrode material capable of absorbing/releasing lithium (Li) may include elemental lithium metal, metal elements and semi-metal elements that can form an alloy with lithium (Li), an alloy and compounds containing such elements, and so on. In particular, they are used together with carbon materials, because in this case, favorable cycle characteristics are provided and high energy density may be obtained. In addition to the alloy including two or more metal elements, the alloy used herein also include alloy containing one or more metal elements and one or more semi-metal elements. The alloy may be in the following states: solid solution, eutectic crystal (eutectic mixture), intermetallic compound and mixtures thereof.

Examples of metal elements and semi-metal elements may include tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), zirconium (Zr), yttrium (Y), and hafnium (Hf). Examples of the aforementioned alloy and compounds may include materials with the chemical formula: MaₛMbₜLiᵤ and materials with the chemical formula: MaₚMc_{q}Mdᵣ. In these chemical formulas, Ma represents at least one element from the metal elements and semi-metal elements capable of forming alloys with lithium, Mb represents at least one element from the metal elements and semi-metal elements except for lithium and Ma, Mc represents at least one element from the non-metal elements, Md represents at least one element from the metal elements and semi-metal elements except for Ma, and s, t, u, p, q and r satisfy s>0, t≥0, u≥0, p>0, q>0 and r≥0.

In addition, inorganic compounds that do not include lithium (Li) may be used in the negative electrode, such as MnO₂, V₂O₅, V₆O₁₃, NiS, and MoS.

In some embodiments, the negative electrode conductive agent may be one or a mixture of several of Super P, acetylene black, nano silver powder, carbon nanotubes, and graphene. In some embodiments, the negative electrode binder may be one or a mixture of several of polyvinylidene fluoride, polyvinylidene fluoride-hexafluoropropylene, polytetrafluoroethylene, and styrene-butadiene rubber (SBR). In some embodiments, the negative electrode thickener may be one or several of polyvinyl pyrrolidone (PVP), sodium carboxymethyl cellulose (CMC-Na), and polyvinyl alcohol (PVA).

### Separator

The lithium-ion battery provided by the disclosure includes a separator located between a positive electrode sheet and a negative electrode sheet. For instance, the separator may include a base layer and a surface treatment layer. The base layer may be a non-woven fabric, film, or composite film with a porous structure, and a material of the base layer may be selected from at least one of polyethylene, polypropylene, polyethylene terephthalate, and polyimide. Specifically, a polypropylene porous film, polyethylene porous film, polypropylene non-woven fabric, polyethylene non-woven fabric, or polypropylene-polyethylene-polypropylene porous composite film may be used. The surface treatment layer is disposed on at least one surface of the base layer. The surface treatment layer may be a polymer layer or an inorganic layer, or it may be a layer formed by mixing polymers and inorganic materials.

### Lithium-ion battery

The lithium-ion battery may be assembled using methods commonly employed in the art, combining the aforementioned positive electrode sheet, negative electrode sheet, electrolyte, and separator. Herein, the assembly process includes winding or stacking the positive electrode sheet, separator, and negative electrode sheet in sequence to form a bare cell, which is then inserted into an aluminum-plastic film, for example, for sealing. Next, the electrolyte is injected, followed by formation, sealing, and testing. The assembled lithium-ion battery is then subjected to electrochemical performance tests and cycle performance tests.

A person having ordinary skill in the art may understand that the abovementioned method for preparing the lithium-ion battery is only an example. Without departing from the content disclosed in the disclosure, other methods commonly used in the art may be adopted.

The following describes a preparation method of a lithium-ion battery. The lithium-ion battery in the disclosure may be a primary lithium battery or a secondary lithium battery. The following explanation uses nickel manganese lithium oxide as an example of the positive electrode active material. It is not difficult to understand that the positive electrode active material in the disclosure is not limited to this. The preparation method for the secondary lithium-ion battery is as follows:
(1) Preparation of a positive electrode sheet includes the following steps: A positive electrode active material such as Li_{0.98}Ni_{0.45}Mn_{1.55}O₄, a positive electrode conductive agent such as Super P, a positive electrode binder such as PVDF, and a solvent N-methyl pyrrolidone (NMP) were mixed and stirred in a specific mass ratio under the action of a vacuum mixer until the system become uniform and transparent to obtain a positive electrode slurry. The mass ratio of each component of the positive electrode active material, the positive electrode conductive agent, and the positive electrode binder was: positive electrode active material: 93% to 98.5%, positive electrode conductive agent: 0.5% to 3%, positive electrode binder: 0.5% to 4%. NMP was added according to the percentage of positive electrode material in a total mass of the positive electrode slurry being 45% to 70%. The positive electrode slurry was then uniformly coated on a positive electrode current collector, and after drying, rolling, cutting, and other processes, the positive electrode sheet was obtained.

### (2) Preparation of negative electrode sheet

After various components of a negative electrode material were mixed, deionized water was added and thoroughly mixed in a vacuum mixer to prepare a uniform negative electrode slurry. A mass ratio of each component in the negative electrode material was as follows: a negative electrode active material: 94% to 98%, a negative electrode conductive agent: 0.2% to 1.5%, a negative electrode thickener: 0.01 to 1.5%, and a negative electrode binder: 1% to 3%. Deionized water was added according to the percentage of negative electrode material in a total mass of the negative electrode slurry being 45% to 70%.

The negative electrode slurry was then uniformly coated on a negative electrode current collector, and after drying, rolling, and cutting, the negative electrode sheet was obtained.

### (3) Preparation of electrolyte

In an argon atmosphere glove box with a water content of <10 ppm, battery-grade fluorinated ethyl methyl carbonate and fluorinated ethylene carbonate were mixed to form an organic solvent. Lithium salt and appropriate additives were then added to the organic solvent and mixed uniformly to obtain an electrolyte. Herein, lithium salt, 1-propene 1,3-sultone, and triallyl isocyanurate may be added as required.

### (4) Preparation of separator

The separator may be any of the abovementioned separators.

### (5) Preparation of lithium-ion battery

The positive electrode sheet, the separator, and the negative electrode sheet prepared as described above were stacked or wound in sequence to obtain an electrode assembly, with the separator located between the positive electrode sheet and the negative electrode sheet for separation. The electrode assembly was wrapped with an aluminum-plastic film, dried, injected with electrolyte, sealed, formed, allowed to stand, and subjected to formation and other processes to prepare a lithium-ion battery.

A person having ordinary skill in the art may understand that the abovementioned method for preparing the lithium-ion battery is only an example. Without departing from the content disclosed in the disclosure, other methods commonly used in the art may be adopted.

The following specific examples and comparative examples are listed to better illustrate the disclosure.

### Example 1

### (1) Preparation of positive electrode sheet

The positive electrode active material Li_{0.98}Ni_{0.45}Mn_{1.55}O₄, positive electrode binder polyvinylidene fluoride (PVDF), positive electrode conductive agent conductive carbon black (super P), and solvent N-methyl pyrrolidone (NMP) were mixed in a vacuum mixer according to a specific mass ratio until the system becomes homogeneous and transparent to obtain a positive electrode slurry. The mass ratio of the positive electrode active material, positive electrode binder, and positive electrode conductive agent was 98:1:1. NMP was added according to the percentage of positive electrode material in the total mass of the positive electrode slurry being 50%. The positive electrode slurry was then uniformly coated on the positive electrode current collector aluminum foil, and after drying, rolling, cutting, and other processes, the positive electrode sheet was obtained.

### (2) Preparation of negative electrode sheet

After various components of the negative electrode material were mixed, deionized water was added and thoroughly mixed in a vacuum mixer to prepare a uniform negative electrode slurry. The mass ratio of the various components of the negative electrode material, including artificial graphite as the negative electrode active material, conductive carbon black (super P), carboxymethyl cellulose sodium (CMC-Na) as the negative electrode thickener, and styrene-butadiene rubber (SBR) as the negative electrode binder, was 96:1:1:2. Deionized water was added according to the percentage of negative electrode material in the total mass of the negative electrode slurry being 50%. The negative electrode slurry was then uniformly coated on a negative electrode current collector copper foil, and after drying, rolling, and cutting, the negative electrode sheet was obtained.

### (3) Preparation of electrolyte

In an argon atmosphere glove box with a water content of <10 ppm, battery-grade fluorinated ethyl methyl carbonate and fluorinated ethylene carbonate were mixed to form an organic solvent, where the ratio between battery-grade fluorinated ethyl methyl carbonate and fluorinated ethylene carbonate was 7:3. Lithium salt and an appropriate additive were then added to the organic solvent and mixed uniformly to obtain an electrolyte. The lithium salt was LiPF₆, and the mass of the lithium salt accounted for 13% of the total mass of the electrolyte. The additive was triallyl isocyanurate, and the mass of triallyl isocyanurate accounted for 0.01% of the total mass of the electrolyte.

### (4) Preparation of separator

A polypropylene (PP) film with a thickness of 12 µm was used as a separator.

### (5) Preparation of lithium-ion battery

The positive electrode sheet, the separator, and the negative electrode sheet prepared as described above were stacked in sequence to obtain an electrode assembly, with the separator located between the positive electrode sheet and the negative electrode sheet for separation. The electrode assembly was wrapped with an aluminum-plastic film, transferred to a vacuum oven for drying at 120°C, injected with 3.0g/Ah of the electrolyte prepared as described above, followed by sealing, formation, and resting processes to prepare a lithium-ion battery with a capacity of 1Ah.

### Example 2

Consistent with the preparation method of Example 1, the difference was that in Example 2, the mass of triallyl isocyanurate accounted for 0.5% of the total mass of the electrolyte.

### Example 3

Consistent with the preparation method of Example 1, the difference was that in Example 3, the mass of triallyl isocyanurate accounted for 1% of the total mass of the electrolyte.

### Example 4

Consistent with the preparation method of Example 1, the difference was that in Example 4, the additives were triallyl isocyanurate and 1-propene 1,3-sultone, where the mass of triallyl isocyanurate accounted for 0.5% of the total mass of the electrolyte, and the mass of 1-propene 1,3-sultone accounted for 0.01% of the total mass of the electrolyte.

### Example 5

Consistent with the preparation method of Example 4, the difference was that in Example 5, the mass of triallyl isocyanurate accounted for 0.5% of the total mass of the electrolyte, and the mass of 1-propene 1,3-sultone accounted for 0.5% of the total mass of the electrolyte.

### Example 6

Consistent with the preparation method of Example 4, the difference was that in Example 6, the mass of triallyl isocyanurate accounted for 0.5% of the total mass of the electrolyte, and the mass of 1-propene 1,3-sultone accounted for 1% of the total mass of the electrolyte.

### Example 7

Consistent with the preparation method of Example 5, the difference was that in Example 7, the ratio between fluorinated ethyl methyl carbonate and fluorinated ethylene carbonate was 8:2.

### Example 8

Consistent with the preparation method of Example 5, the difference was that in Example 8, the ratio between fluorinated ethyl methyl carbonate and fluorinated ethylene carbonate was 9:1.

### Example 9

Consistent with the preparation method of Example 5, the difference was that in Example 9, the ratio between fluorinated ethyl methyl carbonate and fluorinated ethylene carbonate was 10:0. That is, the electrolyte prepared in Example 9 did not include fluorinated ethylene carbonate.

### Comparative Example 1

Consistent with the preparation method of Example 1, the difference was that in Comparative Example 1, the electrolyte in Comparative Example 1 did not include triallyl isocyanurate.

### Comparative Example 2

Consistent with the preparation method of Example 1, the difference was that in Comparative Example 2, the electrolyte did not include triallyl isocyanurate, and the additive was vinylene carbonate (VC), with vinylene carbonate accounting for 0.5% of the total mass of the electrolyte.

### Comparative Example 3

Consistent with the preparation method of Example 1, the difference was that in Comparative Example 3, the electrolyte did not include triallyl isocyanurate, and the additives were vinylene carbonate (VC) and ethylene sulfate (DTD), where vinylene carbonate accounted for 0.5% of the total mass of the electrolyte, and ethylene sulfate accounted for 0.5% of the total mass of the electrolyte.

### Comparative Example 4

Consistent with the preparation method of Example 1, the difference was that in Comparative Example 4, the electrolyte did not include triallyl isocyanurate, and the additive was 1-propene 1,3-sultone, with the mass of 1-propene 1,3-sultone accounting for 0.01% of the total mass of the electrolyte.

### Comparative Example 5

Consistent with the preparation method of Comparative Example 4, the difference was that in Comparative Example 5, the mass of 1-propene 1,3-sultone in the electrolyte accounted for 0.5% of the total mass of the electrolyte.

### Comparative Example 6

Consistent with the preparation method of Comparative Example 4, the difference was that in Comparative Example 6, the mass of 1-propene 1,3-sultone in the electrolyte accounted for 1% of the total mass of the electrolyte.

Thereafter, the lithium-ion batteries of the examples and comparative examples are subjected to the following tests, with the specific test methods as follows:

### (1) Direct current resistance (DCR) test at 25°C of lithium-ion battery

At a specified temperature, when the battery was discharged at 1 C to 50% SOC (state of charge, reflecting the remaining capacity of the battery), the current was turned up to 4 C and held for 30 seconds. The difference between the updated stable voltage and the original platform voltage was detected, and the ratio of its value to the 4 C current value was the direct current resistance of the battery. The DCR test result performed after the battery is fully charged for the first time was the initial DCR of the battery.

### (2) High-temperature storage (60°C) capacity retention ratio of lithium-ion battery

After being fully charged, the lithium-ion battery was placed in an incubator at 60°C for 15 days and then discharged at a rate of 1 C to the cut-off voltage after sufficient cooling, and the percentage of its capacity relative to the initial discharge capacity were compared.

### (3) High-temperature (45°C) cycle test

In a 45°C environment, the battery was subjected to charge and discharge cycles, with the cut-off voltage range set at 3.4V to 4.85V and charge/discharge rates at 0.5C/1C. The discharge capacity for each cycle was recorded. The test was terminated when the battery capacity reached 80% SOC (State of Charge), and the actual number of cycles achieved was recorded.

For clearer illustration, Table 1 shows the electrolyte composition table of different groups of examples and comparative examples.

**Table 1**

| Group | Mass ratio of FEMC to FEC | LiPF₆ | Additive |
|---|---|---|---|
| Example 1 | 7:3 | 13% | 0.01% TAIC |
| Example 2 | 7:3 | 13% | 0.5% TAIC |
| Example 3 | 7:3 | 13% | 1% TAIC |
| Example 4 | 7:3 | 13% | 0.5% TAIC +0.01%PST |
| Example 5 | 7:3 | 13% | 0.5% TAIC+0.5%PST |
| Example 6 | 7:3 | 13% | 0.5% TAIC+1%PST |
| Example 7 | 8:2 | 13% | 0.5% TAIC+0.5%PST |
| Example 8 | 9:1 | 13% | 0.5% TAIC+0.5%PST |
| Example 9 | 10:0 | 13% | 0.5% TAIC+0.5%PST |
| Comparative Example 1 | 7:3 | 13% | None |
| Comparative Example 2 | 7:3 | 13% | 0.5%VC |
| Comparative Example 3 | 7:3 | 13% | 0.5%VC+0.5%DTD |
| Comparative Example 4 | 7:3 | 13% | 0.01%PST |
| Comparative Example 5 | 7:3 | 13% | 0.5%PST |
| Comparative Example 6 | 7:3 | 13% | 1%PST |

Table 2 shows the experimental results of Examples 1 to 9 and Comparative Examples 1 to 6.

**Table 2**

| Group | 25°C DCR (mΩ) | Storage capacity retention ratio (%) at 60°C | High-temperature (45°C) cycle number (80% SOH) |
|---|---|---|---|
| Example 1 | 114 | 73 | 340 |
| Example 2 | 77 | 76 | 407 |
| Example 3 | 98 | 85 | 347 |
| Example 4 | 68 | 92 | 451 |
| Example 5 | 60 | 96 | 500 |
| Example 6 | 66 | 92 | 462 |
| Example 7 | 119 | 71 | 319 |
| Example 8 | 146 | 67 | 311 |
| Example 9 | 152 | 65 | 297 |
| Comparative Example 1 | 193 | 62 | 210 |
| Comparative Example 2 | 199 | 63 | 266 |
| Comparative Example 3 | 161 | 64 | 272 |
| Comparative Example 4 | 105 | 63 | 269 |
| Comparative Example 5 | 126 | 73 | 285 |
| Comparative Example 6 | 167 | 83 | 215 |

By analyzing the above data, the following conclusions may be drawn:
By comparing Comparative Examples 1 to 3 with Examples 1 to 3, it may be known that compared to Comparative Examples 1 to 3 where no additive is used or only other additives (e.g., VC in Comparative Example 2) are used in the perfluorinated solvent, the lithium-ion batteries of Examples 1 to 3 with TAIC added to the perfluorinated solvent show a certain degree of improvement in various high-temperature performance aspects. For instance, the number of high-temperature cycles is significantly increased and the direct current resistance (DCR) is notably reduced.

Comparing Comparative Examples 4 to 6 with Examples 1 to 3, it may be known that compared with Comparative Examples 4 to 6 where 1-propene 1,3-sultone additive is singly added in the perfluorinated solvent, the electrolyte of Examples 1 to 3 has TAIC added in the perfluorinated solvent. When this electrolyte is applied to a high voltage lithium-ion battery, the high-temperature capacity retention ratio and high-temperature cycle number of the battery are improved to a certain extent. This is because when 1-propene 1,3-sultone is used as a single additive, the protective film formed by 1-propene 1,3-sultone is swollen and unstable, while the protective film formed by TAIC in the examples of the disclosure is stable. This protective film may fully protect the electrode sheets to ensure the stability of the interface between the electrode sheets and electrolyte, so that the electrical performance of the high voltage battery is improved.

Comparing Comparative Examples 4 to 6, Examples 1 to 3, and Examples 4 to 6, it may be known that when 1-propene 1,3-sultone and triallyl isocyanurate are used in combination as additives in the perfluorinated solvent, the high-temperature storage capacity retention ratio and high-temperature cycle number of the battery are significantly improved. For instance, in Example 5, the direct current resistance is reduced to 60 mΩ, the high-temperature storage capacity retention ratio is increased to 96%, and the high-temperature cycle number is increased to 500 cycles. The reason is that when the perfluorinated solvent is used as the solvent in the electrolyte and high-voltage resistant 1-propene 1,3-sultone and triallyl isocyanurate are used in combination as additives, both 1-propene 1,3-sultone and triallyl isocyanurate form long-chain copolymer protective films on the positive electrode sheet side and the negative electrode sheet side. Compared with the protective film of short-chain polymer formed by using only TAIC (Examples 1 to 3) or PST (Comparative Examples 4 to 6), this long-chain copolymer protective film is stable at high temperatures. Therefore, the high-temperature cycle number and the high-temperature storage capacity retention ratio of the battery may be significantly improved.

Referring to Examples 1 to 3, the mass of triallyl isocyanurate is limited to 0.01% to 1% of the total mass of the electrolyte. Herein, the lithium-ion battery exhibits good high-temperature cycle number retention ratio. For instance, in Example 2, the high-temperature cycle number increases to 407 cycles. When the amount of TAIC increases from 0.01% to 0.5% (referring to Examples 1 and 2), the battery's high-temperature storage capacity retention ratio and high-temperature cycle number increase, indicating that under high-temperature conditions, the protective film formed by the TAIC additive is stable, and the reaction at the solid-electrolyte interface is reduced. However, when the amount of TAIC reaches 1%, compared to when the amount of TAIC is 0.5%, the battery's high-temperature cycling performance deteriorates to a certain extent. In addition, when the mass of triallyl isocyanurate accounts for 0.5% of the total mass of the electrolyte, the battery performance is optimal.

In addition, referring to Examples 4 to 6, the mass of 1-propene 1,3-sultone is limited to 0.01% to 1% of the total mass of the electrolyte. Herein, the direct current resistance, high-temperature cycle number, and high-temperature storage capacity retention ratio of the lithium-ion battery are all relatively good. For instance, in Example 5, the direct current resistance is reduced to 60 mΩ, the high-temperature storage capacity retention ratio is increased to 96%, and the high-temperature cycle number is increased to 500 cycles. If the addition amount of 1-propene 1,3-sultone is excessively large, excessive 1-propene 1,3-sultone may lead to excessive growth of the protective film and form an excessively thick protective film, which may result in an increase in the DCR of the lithium-ion battery. The lithium-ion battery may thus exhibit high-temperature capacity loss and reduced cycle life. Further, when the mass of 1-propene 1,3-sultone and the mass of triallyl isocyanurate each account for 0.5% of the total mass of the electrolyte, the battery performance is optimal.

Comparing Example 5 with Examples 8 to 9, it may be known that when the mass of triallyl isocyanurate and the mass of 1-propene 1,3-sultone each account for 0.5% of the total mass of the electrolyte, adjusting the solvent components in the perfluorinated solvent may also lead to significant changes in battery performance. When the proportion of FEMC in the perfluorinated solvent is further improved and the proportion of FEC is reduced, the DCR of the battery may increase significantly, and the high-temperature cycle number and high-temperature storage capacity retention ratio of the battery may also decrease. This is because when the content of FEMC increases, FEMC may decompose at the solid-electrolyte interface (i.e., the interface between the electrolyte and the electrode sheets), thereby a large amount of high-temperature unstable by-products are produced, and these unstable by-products are produced may eventually lead to a decrease in the high-temperature performance of the battery. In addition, the high-temperature performance of the battery is optimal when FEMC:FEC=7:3.

From Examples 4 to 5 and Comparative Examples 1 to 6, it may be known that when the additive triallyl isocyanurate is not used or other additives are used alone (e.g., VC in Comparative Example 2), the high-temperature performance of the battery deteriorates significantly in various aspects, indicating that the combined use of TAIC and PST also plays a very important role in the battery. In addition, from Comparative Examples 1 to 6 and Examples 1 to 5, it may be known that when using perfluorinated solvent as the solvent, only the combined use of triallyl isocyanurate and 1-propene 1,3-sultone as additives can optimize the high-temperature performance of the battery. When conventional additives VC and DTD are used in combination, the nickel-manganese lithium high voltage system has excessively high DCR and cannot cycle at room temperature, and the capacity cannot be delivered after high-temperature storage. All these indicate that TAIC and PST must be used in combination to ensure the normal operation of the high voltage system, especially for the high voltage system using nickel-manganese lithium as the positive electrode active material and graphene as the negative electrode active material.

In view of the foregoing, in the electrolyte provided by the embodiments of the disclosure, perfluorinated solvent is used as the solvent, and triallyl isocyanurate is added to the perfluorinated solvent as an additive. In this way, the electrolyte is able to withstand high voltage, and a stable protective film is formed at the interface between the electrode sheets and the electrolyte when the electrolyte is applied to a lithium-ion battery. As such, the stability of interface between the electrode sheets and electrolyte is ensured, and the electrical performance of the high voltage battery is improved. In addition, in the disclosure, the use of triallyl isocyanurate and the use of 1-propene 1,3-sultone may be combined in the perfluorinated solvent-based electrolyte. When triallyl isocyanurate and 1-propene 1,3-sultone are added to the electrolyte in an optimal ratio, they can effectively participate in forming a stable protective film at the interface between the electrode sheets and the electrolyte. As such, the stability of the interface between the electrode sheets and electrolyte at high temperatures is ensured, the stability of the electrolyte during high-temperature cycling is significantly improved, comprehensive enhancement of high-temperature performance of the battery is achieved (for example, battery DCR is reduced), and high-temperature cycling stability and high-temperature storage capacity retention ratio of the battery are enhanced and increased.

## Claims

1. An electrolyte, comprising:
a solvent, wherein the solvent is a fluorinated solvent;
lithium salt; and
an additive, comprising triallyl isocyanurate.

2. The electrolyte according to claim 1, wherein the additive further comprises 1-propene 1,3-sultone.

3. The electrolyte according to claim 1, wherein a mass of the 1-propene 1,3-sultone accounts for 0.01% to 1% of a total mass of the electrolyte, and a mass of the triallyl isocyanurate accounts for 0.01% to 1% of the total mass of the electrolyte.

4. The electrolyte according to claim 1, wherein the fluorinated solvent comprises fluorinated ethyl methyl carbonate.

5. The electrolyte according to claim 4, wherein the fluorinated solvent further comprises fluorinated ethylene carbonate.

6. The electrolyte according to claim 5, wherein a mass ratio between the fluorinated ethyl methyl carbonate and the fluorinated ethylene carbonate is 7:3 to 10:0.

7. The electrolyte according to claim 1, wherein a mass of the lithium salt is 12% to 20% of a total mass of the electrolyte.

8. The electrolyte according to claim 7, wherein the lithium salt is one or more selected from lithium hexafluorophosphate, lithium bis(fluorosulfonyl)imide, lithium bis(trifluoromethanesulfonyl)imide, lithium tetrafluoroborate, lithium methanesulfonate, lithium trifluoromethanesulfonate, lithium hexafluoroarsenate, lithium hexafluoroantimonate, lithium perchlorate, lithium difluoro(oxalato)borate, lithium bis(oxalato)borate, and lithium difluorophosphate.

9. A lithium-ion battery comprising a positive electrode sheet, a negative electrode sheet, a separator located between the positive electrode sheet and the negative electrode sheet, and the electrolyte according to claim 1.

10. The lithium-ion battery according to claim 9, wherein the positive electrode sheet comprises a positive electrode current collector and a positive electrode active material located on the positive electrode current collector, the positive electrode active material comprises lithium nickel manganese oxide, and the chemical formula of the lithium nickel manganese oxide is LiₐNiₓMn_{y}O_{4-z}M_{z}, wherein 0.90≤a≤1.10, 0.4≤x≤0.6, 1.4≤y≤1.6, 0≤z≤0.1, and the element M is one or more of Cl, Br, I, S, Se, Te, or F.

11. The lithium-ion battery according to claim 10, wherein the negative electrode sheet comprises a negative electrode current collector and a negative electrode material layer located on the negative electrode current collector, and the negative electrode material layer comprises artificial graphite.
